# EUROPÄISCHE PATENTSCHRIFT

(11) **EP 0 970 018 B1**
(45) Veröffentlichungstag und Bekanntmachung des Hinweises auf die Patenterteilung: **04.07.2001**
(21) Anmeldenummer: 98907748.2
(22) Anmeldetag: 10.03.1998
(51) Int. Cl.: C02F 1/14

(54) **ANLAGE ZUR ENTSALZUNG ODER REINIGUNG VON MEER- ODER BRACKWASSER MITTELS SOLARENERGIE**
FACILITY FOR DESALINATING OR PURIFYING SEA WATER OR BRACKISH WATER BY MEANS OF SOLAR ENERGY
INSTALLATION POUR DESSALER OU PURIFIER DE L'EAU DE MER OU DE L'EAU SAUMATRE AU MOYEN D'ENERGIE SOLAIRE

(30) Priorität: 11.03.1997 AT 41797
(43) Veröffentlichungstag der Anmeldung: 12.01.2000
(73) Patentinhaber: Markopulos, Johannes, 2512 Tribuswinkel (AT)
(72) Erfinder: Markopulos, Johannes, 2512 Tribuswinkel (AT)
(74) Vertreter: Weiser, Andreas, Dipl.-Ing.
(86) Internationale Anmeldenummer: AT9800061
(87) Internationale Veröffentlichungsnummer: WO9840313

(56) Entgegenhaltungen:
- WO-A-80/00077
- FR-A- 2 101 951
- FR-A- 2 379 482
- US-A- 4 209 364

## Beschreibung

Die vorliegende Erfindung betrifft eine Anlage zur Entsalzung oder Reinigung von Meer- oder Brackwasser mittels Solarenergie, mit
einem geschlossenen Kreislauf aus einem thermischen Sonnenkollektor und einem Wärmetauscher, in welchem Kreislauf ein Wärmeträgermedium zirkuliert,
einem Becken, das mit dem zu behandelnden Meer- oder Brackwasser beschickbar ist und in dem der Wärmetauscher zur Aufheizung und Verdampfung desselben angeordnet ist,
einer Kühlfläche, die oberhalb des Beckens zur Kondensation des aufsteigenden Dampfes liegt, und
Wassersammlern, die unter Teilbereichen der Kühlfläche zum Auffangen des Kondenswassers angeordnet sind.

Es ist bekannt, daß auf bestimmten Inseln im Mittelmeer sowie in anderen Gebieten Trinkwasser-Knappheit herrscht. Dieses Problem wird entweder durch Transport von Trinkwasser vom Festland oder durch diverse energieaufwendige Verfahren (z.B. Entsalzung des Meerwassers mittels der Methode der Umkehrung des Osmotischen Druckes) provisorisch gelöst. Eine andere klassische Möglichkeit ist das direkte Erwärmen des Meerwassers durch die Sonne in einem Becken, u.zw. durch eine Glasscheibe oder Transparentfolie hindurch, die zugleich als Abdeckung dient, wobei die Verdampfung und das Auffangen des Kondenswassers mit Hilfe derselben Glasabdeckung durchgeführt werden. Den letzten Stand in dieser Art der Entsalzung stellen die US 4 235 679 sowie die US 4 343 683, die US 4 525 242 und die DE 43 21 192 dar. Darüberhinaus offenbart WO-A-80/00077 eine Anlage zur wasserverdampfung mittels Solarenergie, bei der, der Sonnekollektor in einem Abstand zu und oberhalb der kühlfläche angeordnet sein kann.

Diese klassischen Möglichkeiten benötigen entweder sehr viel Energie oder haben - was die Methoden anbelangt, die mit Sonnenenergie arbeiten - einen sehr geringen Wirkungsgrad, da bei den bekannten Konstruktionen einerseits dieselbe Abdeckung (Glasscheibe), die von der Sonne erwärmt wird, auch als Kühlfläche dient, anderseits sehr hohe Verluste an verdunstetem Wasser auftreten. Weiters können diese Methoden den erforderlichen Bedarf nicht decken, weil sie mit einer begrenzten Leistung verbunden sind.

Die Erfindung setzt sich daher zum Ziel, eine Anlage zur Entsalzung oder Reinigung von Meer- oder Brackwasser zu schaffen, welche einen wesentlich höheren Wirkungsgrad hat als die bekannten Lösungen, und dies bei minimalem Platzbedarf.

Dieses Ziel wird mit einer Anlage der einleitend genannten Art erreicht, die sich dadurch auszeichnet,
daß der Sonnenkollektor in einem Abstand zu und oberhalb der Kühlfläche in abschattender Beziehung zu letzterer angeordnet ist,
die Kühlfläche aus wärmeleitendem Material gefertigt ist, und
der zwischen Kühlfläche und Sonnenkollektor verbleibende Zwischenraum zur seitlichen Durchströmung mit Umgebungsluft zugänglich ist.

Auf diese Weise wird der Platzgewinn, der durch die Übereinanderanordnung von Sonnenkollektor und Kühlfläche erzielt wird, gleichzeitig zur Abschattung und damit Kühlung der Kühlfläche ausgenützt, wobei die freie Durchströmung des Zwischenraumes zwischen Sonnenkollektor und Kühlfläche die Kühlung der letzteren wesentlich erhöht. Gegenüber den bekannten Konstruktionen erreicht die erfindungsgemäße Anlage bei gleichem Stellflächenbedarf einen wesentlich höheren Wirkungsgrad.

In einer bevorzugten Ausführungsform der Erfindung für Anlagen, bei denen der Sonnenkollektor gegenüber der Horizontalen geneigt ist, wird vorgesehen, daß die Kühlfläche stärker geneigt ist als der Sonnenkollektor, so daß der genannte Zwischenraum sich in Richtung nach oben düsenförmig verjüngt. Dadurch wird die Luftzirkulation durch den genannten Zwischenraum erheblich gefördert, wie später noch ausführlicher beschrieben wird.

Bevorzugt wird vorgesehen, daß der Raum zwischen Becken und Kühlfläche allseitig geschlossen und mittels einer Vakuumpumpe unter Unterdruck setzbar ist, um die Verdampfung zu fördern.

In weiterer Ausgestaltung hat die Kühlfläche im Vertikalschnitt gesehen Wellenform und die Wassersammler sind als in einem Abstand unter den Wellentälern verlaufende Sammelrinnen oder als durchgehendes feines beschichtetes Netz ausgebildet.

Besonders vorteilhaft ist es, wenn das Becken im Vertikalschnitt gesehen eine sich nach unten verjüngende Keilform hat. Durch diese konusförmige Konstruktion entsteht bei jedem Einströmen von Meer- oder Brackwasser in das Becken eine Kreisbewegung, welche die Ablagerung der Rückstände am Beckenboden fördert.

Besonders günstig ist es, wenn am Boden des Beckens eine zu einem Trogkettenförderer führende Förderschnecke zum Austrag von Rückständen wie Salzsole od.dgl. vorgesehen ist.

Wenn die Anlage speziell zur Entsalzung von Meerwasser angewandt wird, besteht eine weitere bevorzugte Ausführungsform der Erfindung darin, daß das Becken im wesentlichen auf Meereshöhe liegt und über eine bei Flut durchströmte und bei Ebbe trockenfallende Rohrverbindung mit dem Meer in Verbindung steht. Dadurch können Ebbe und Flut zur Errichtung eines automatischen chargenweisen Beschickungszyklus des Beckens ausgenützt werden.

Alternativ kann das Becken über eine in die Rohrverbindung eingeschaltete Speisepumpe aus einem Meer- oder Brackwasserreservoir, z.B. einem Uferbrunnen, beschickt werden.

Auf Grund des hohen Wirkungsgrades der Anlage kann im weiterer Ausgestaltung der Erfindung in dem geschlossenen Kreislauf zwischen den Sonnenkollektor und den Wärmetauscher eim Absorber zum Betrieb eines Kühlhauses oder eine Dampfturbine zum Betrieb eines Generator zwischengeschaltet werden, welche bevorzugt in Zeiten schwacher Sonneneinstrahlung mit Hilfe einer Bypass-Schaltung überbrückbar sind.

Zusätzlich können auch Photovoltaik-Panele zum Betrieb elektrisch speisbarer Teile der Anlage vorgesehen werden, so daß die gesamte Anlage autark ist.

Gemäß einer weiteren besonders vorteilhaften Ausführungsform der Erfindung kann vorgesehen werden, daß die Rohrverbindung vor ihrer Einmündung in das Becken über einen weiteren Wärmetauscher geführt ist, der in wärmeleitender Beziehung zur Kühlfläche angeordnet ist. Auf diese Weise kann die Kühlfläche auf Grund der niedrigen Ausgangstemperatur des zu behandelnden Meer- oder Brackwassers noch stärker gekühlt und gleichzeitig letzteres vorgewärmt werden, so daß der Wirkungsgrad der Anlage noch weiter gesteigert wird.

Die Erfindung wird nachstehend an Hand eines in den Zeichnungen dargestellten Ausführungsbeispieles näher erläutert. In den Zeichnungen zeigt
Fig. 1 die erfindungsgemäße Anlage in einer teilweise aufgebrochenen Vorderansicht,
Fig. 2 einen Horizontalschnitt durch die Anlage von Fig. 1 in Richtung der Schnittlinie B-B von Fig. 1,
Fig. 3 einen Vertikalschnitt durch die Anlage von Fig. 1 in Richtung der Linie A-A von Fig. 1,
Fig. 4 einen teilweisen Querschnitt durch die Kühlfläche entsprechend dem Detail X von Fig. 3,
Fig. 5 einen Vertikalschnitt durch eine zweite Ausführungsform der Anlage analog der Darstellung von Fig. 3, und
Fig. 6 ein Blockschaltbild des Wärmeträgermediumkreises der Anlage von Fig. 5.

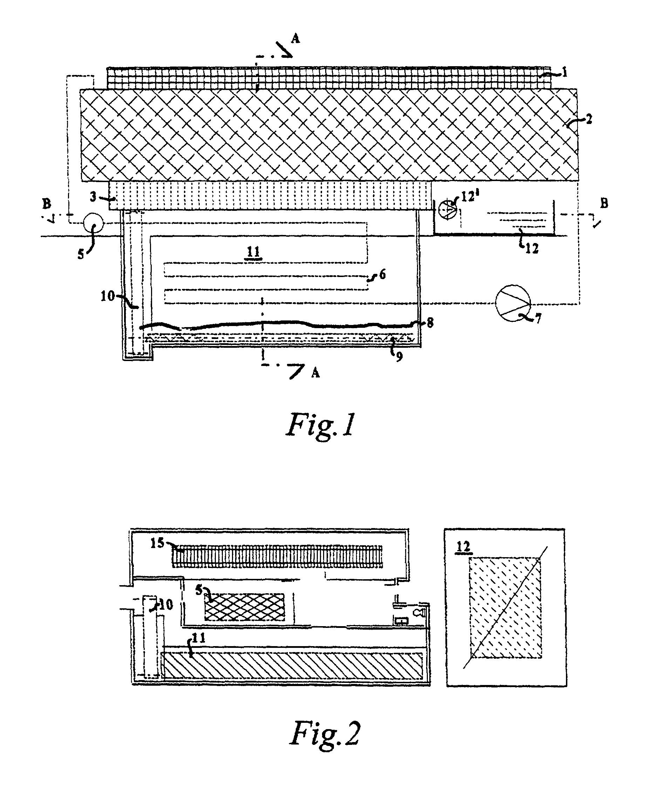

Die Fig. 1-4 zeigen eine erste Ausführungsform der Anlage der Erfindung, u.zw. in der Variante mit zusätzlicher Zwischenschaltung eines Absorbers 5 für den Betrieb eines Kühlhauses 15. Ein thermischer Sonnenkollektor 2 erwärmt ein in geschlossenem Kreislauf befindliches, für diese Variante spezielle Trägermedium (z.B. eine Type von Mineralöl) auf ca. 200°C. Das Trägermedium wird einem Absorber 5 zugeführt, der für die Kälteproduktion im Kühlhaus 15 sorgt. Dann wird das durch Abgabe der Energie im Absorber 5 auf ca. 90 bis 100°C abgekühlte Trägermedium einem Wärmetauscher 6 zugeführt, der sich in der unteren Hälfte eines mit Meerwasser gefüllten Beckens 11 befindet. Nach einer weiteren Abkühlung des Trägermediums im Wärmetauscher 6 durch Temperaturausgleich auf die Temperatur des Wassers im Becken, welche bei einer Frischzufuhr von Meerwasser durch eine Rohrverbindung 4 des Beckens 11 mit dem Meer ca. 20°C beträgt und nach Unterbrechung der Wasserzufuhr durch den Temperaturausgleich auf ca. 60 bis 70°C aufgewärmt wird, sorgt eine Vakuum- bzw. Kreislaufpumpe 7 für das Schließen des Kreislaufes, so daß das abgekühlte Trägermedium in den thermischen Sonnenkollektor 2 rezirkuliert wird.

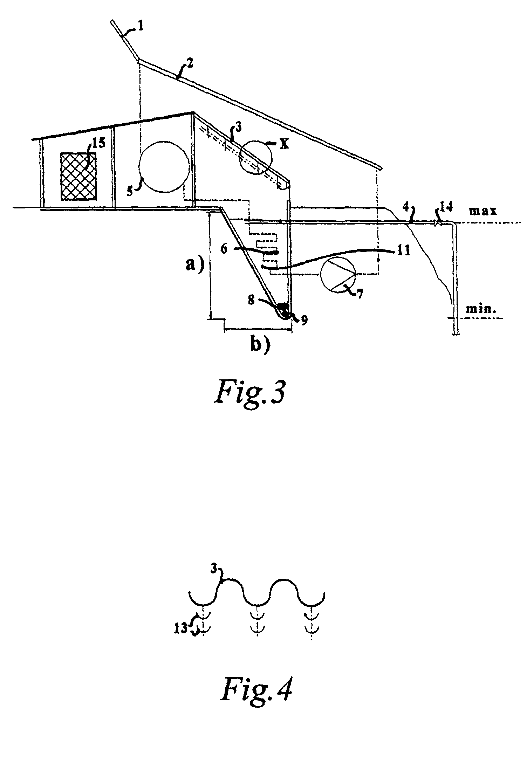

Das im Meerwasserbecken 11 befindliche Meerwasser wird durch die laufende Aufwärmung verdampft. Durch die natürliche Konvektion, wonach warme Luftschichten leichter sind und nach oben steigen, werden die mit verdampftem Süßwasser angereicherten (gesättigten) Luftschichten an eine aus rostfreiem Metall (z.B. Alu) in gewellter Form bestehende Kühlfläche 3 geführt und kondensieren dort. Bei entsprechender Ansammlung von Kondenswasser bilden sich Wassertropfen, die wegen der Schräge der Wellungen der Kühlfläche (siehe Detail X Fig. 4) in die Wellentäler fließen und nach unten tropfen. Diese Tropfen werden in aus Kunststoff bestehenden (um den Rostprozeß zu verhindern, weil das Kondenswasser mit Sauerstoff stark angereichert ist) Wassersammlern 13 angesammelt und über Wasserrinnen in das beiliegende Süßwasserbecken 12 geleitet.

Durch die laufende Verdampfung im Meerwasserbecken 11 wird das darin zurückbleibende Meerwasser mit Salz angereichert (gesättigt), und nach einigen Tagen bildet sich am Boden des Beckens 11 eine Salzsole 8. Diese Salzsole 8 ist nach Bedarf periodisch zu entfernen (z.B. während der Flutphase, damit der durch die Entfernung der Salzsole entstehende freie Raum nachgefüllt werden kann). Die Salzsole 8 wird mit Hilfe einer am Boden des Meerwasserbeckens 11 montierten Förderschnecke 9 zu einem auf der Seite des Meerwasserbeckens 11 eingesetzten Trogkettenförderer 10 transportiert und durch den Trogkettenförderer 10, der mit einer Austropfmöglichkeit versehen ist, an die Oberfläche gebracht, wo sie dann mittels kleinerer Container in flachen Pfannen (in der Zeichnung nicht dargestellt) im Freien zur Austrocknung gelagert wird. Somit entsteht beim Betrieb der Anlage als Nebenprodukt Salz, das am freien Markt verkäuflich ist.

Das Becken 11 ist eine konusförmige Konstruktion, so daß durch das Einströmen des Meerwassers bei jeder Meerwasser-Zufuhr eine Kreisbewegung im Wasser des Beckens entsteht, die zur Reinigung bzw. Ansammlung der Salzsole 8 am Beckenboden dient. Die Dimensionen des Meerwasserbeckens 11 sind nach Bedarf festzulegen, sowie das Verhältnis von Höhe a zu Breite b empirisch durch Versuche zu eruieren.

Die Rohrverbindung 4 des Beckens 11 mit dem offenen Meer endet an der Innenseite des Beckens 11 an der geneigten Fläche horizontal. Das andere Ende der Rohrverkleidung 4 ist im offenen Meer nach unten gekrümmt, u.zw. mindestens 200 cm vom Ufer entfernt, und taucht stets (auch an der tiefsten Stelle der Meeresoberfläche bei Ebbe) mindestens 50 cm ins Wasser ein. Dadurch wird vermieden, daß einerseits schwimmende Ablagerungen sowie anderseits Sand ins Meerwasserbecken gelangen. Die Beschickung des Beckens 11 mit Meerwasser erfolgt "automatisch". Sie beginnt in dem Moment, wo die Flut die untere Rohrkante des horizontalen Teiles der Rohrverbindung 4 erreicht, und endet in dem Moment, wo die Ebbe etwa dieselbe Rohrkante des horizontalen Teiles der Rohrverbindung 4 erreicht, wobei Luft von der Seite des Meerwasserbeckens 11 ins Rohr 4 gelangt und die Siphonwirkung unterbrochen wird. Eine Unterbrechung der Meerwasserzufuhr ist notwendig, damit für einen längeren Zeitraum das Wasser im Becken 11 die für die Verdampfung notwendigen Temperaturen erreichen bzw. beibehalten kann. Da die wärmeren Wasserschichten im wesentlichen an der Wasseroberfläche sind, werden diese bei jeder Frischwasserzufuhr leicht abgekühlt und dadurch der Verdampfungsprozeß reduziert bzw. unterbrochen.

Vor der Einmündung des Stutzens der Rohrverbindung 4 ins offene Meer ist ein feines Netz aufgespannt, damit keine Fische in das Innere des Beckens 11 hineinschwimmen. Weiters ist die Rohrverbindung mit einem Absperrhahn 14 versehen, damit im Winter und während der schwächsten Sonneneinstrahlung die Meerwasserzufuhr abgebrochen werden kann, um das Becken und die Maschinenausrüstung von diversen Meeres-Mikroorganismen, die sich bei höheren Temperaturen bilden können, sowie sonstigen Ablagerungen gründlich reinigen zu können.

Die Anordnung des thermischen Sonnenkollektors 2 gegenüber der Kühlfläche 3 ist so gewählt, daß er bevorzugt nach Westen gerichtet ist (Mittelmeerraum). Der Sonnenkollektor 2 ist als begehbare und nach unten stark isolierte Überdachung der Kühlfläche 3 gebildet. Der Raum zwischen dem Sonnenkollektor 2 und der Kühlfläche 3 ist von allen Seiten her offen, so daß Wind, egal von welcher Seite er kommt, die Kühlfläche 3 leicht erreichen kann. Damit auch bei Windstille ein Luftstrom zwischen Sonnenkollektor 2 und Kühlfläche 3 entsteht, ist die Neigung des Sonnenkollektors 2 zur Neigung der Kühlfläche 3 dergestalt, daß der Zwischenraum eine Keilform hat bzw. eine Art Düse entsteht. An der oberen Seite der Kühlfläche, wo die engste Stelle der Düse ist, erwärmt sich die Luft stärker, und durch die Keilform entsteht an dieser Stelle eine höhere Geschwindigkeit der Luftströmung. Somit entsteht eine schnellere Luftzirkulation, wodurch ständig Frischluft zugeführt und somit eine bessere Kühlung erreicht wird. Der Sonnenkollektor ist weiters in seiner Flächengröße so dimensioniert, daß eine ständige Überschattung der Kühlfläche gewährleistet ist.

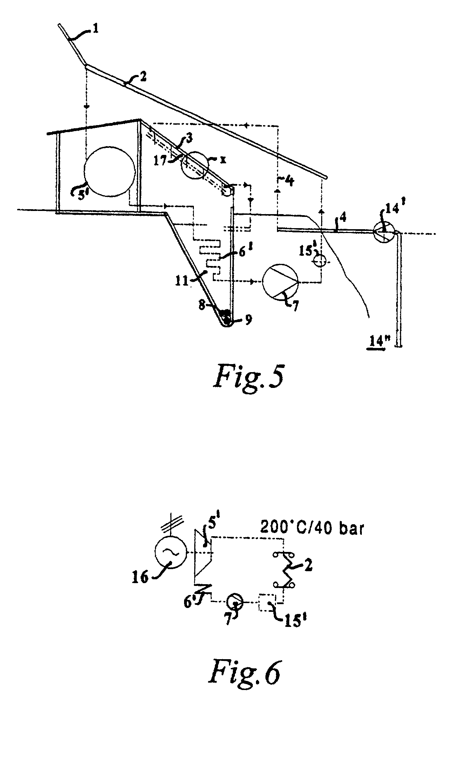

Die Fig. 5 und 6 zeigen eine zweite Ausführungsform der Anlage, u.zw. in der Variante mit zusätzlicher Zwischenschaltung einer Dampfturbine 5' für den Betrieb eines elektrischen Generators 16. Der thermische Sonnenkollektor 2 erwärmt das für diese Variante im geschlossenen Kreislauf befindliche spezielle Kältemittel (z.B. Lithiumbromid-Wasserlösung), das als Trägermedium verwendet wird, auf ca. 200°C und entwickelt einen Druck von 40 bar. Das Trägermedium wird einer Dampfturbine 5' zugeführt, die für den Betrieb des Generators 16 sorgt. Dann wird das durch Abgabe der Energie in der Dampfturbine 5' auf ca. 90 bis 100°C abgekühlte Trägermedium einem Vakuum-Kondensator 6' zugeführt, der sich als Wärmetauscher in dem mit Meerwasser gefüllten Becken 11 befindet. Nach einer weiteren Abkühlung des Trägermediums im Kondensator 6' durch Temperaturausgleich auf die Temperatur des Wassers im Becken wird es über die Vakuumpumpe 7 unter Druck einem Verflüssiger 15' zugeführt. Von dort gelangt das abgekühlte Trägermedium wieder in den thermischen Sonnenkollektor 2, was den Kreislauf schließt.

An Hand der Ausführungsform der Fig. 5 und 6 ist ferner eine alternative Art der Beschickung des Beckens 11 gezeigt. Das Becken 11 wird hier über die Rohrverbindung 4 aus einem Vorrat an Meer- oder Brackwasser, z.B. dem Meer, einem Uferbrunnen 14", einem Sumpf usw. mit Hilfe einer in die Rohrverbindung 4 eingeschalteten Speisepumpe 14' beschickt. Die Speisepumpe 14' wird bevorzugt intermittierend betrieben, um eine chargenweise Beschickung des Beckens 11 zu gewährleisten.

Die geringe Ausgangstemperatur des zu behandelnden Meeroder Brackwassers kann darüber hinaus ausgenützt werden, die Kühlfläche 3 vorzukühlen bzw. das zu behandelnde Wasser vorzuwärmen. Zu diesem Zweck kann, wie in Fig. 5 gezeigt, die Rohrverbindung 4 über einen weiteren Wärmetauscher 17 geführt werden, der in wärmeleitender Beziehung zur Kühlfläche 3 angeordnet ist, beispielsweise unterhalb der Kühlfläche zwischen Kühlfläche 3 und Wassersammlern 13 liegt.

Während des Winters bzw. der Abendstunden ist in allen Varianten weiterhin eine Süßwasserproduktion möglich. In solchen Perioden der schwachen Sonneneinstrahlung wird durch eine elektronische Regelung das Trägermedium über eine Bypass-Schaltung (nicht dargestellt) am Absorber 5 oder der Dampfturbine 5' vorbei direkt dem Wärmetauscher 6, 6' im Wasserbecken 11 zugeführt, so daß auch bei schwacher Erwärmung des Trägermediums noch genügend Energie vorhanden ist, um das Meerwasser im Becken 11 aufzuwärmen und auf längere Zeit eine Verdampfung, d.h. Süßwasserproduktion, durchzuführen. Es ist sogar in der Nacht eine Süßwasserproduktion möglich, da das am Tag erwärmte Meerwasser bis zu einem Temperaturabfall im Bereich von 30°C kondensieren kann, weil am Abend gleichzeitig ein Temperaturabfall der Umgebungsluft stattfindet, wodurch sich die Kühlfläche 3 ebenfalls stärker abkühlt.

Selbstverständlich ist es auch möglich, weder einen Absorber 5 noch eine Dampfturbine 5' einzuschalten, d.h. der geschlossene Wärmemediumträgerkreislauf besteht dann ausschließlich aus Sonnenkollektor 2, Wärmetauscher 6 und allenfalls Umwälzpumpe 7.

Der Raum zwischen dem Becken 11 und der Kühlfläche 3 ist bevorzugt allseitig geschlossen und mittels einer Vakuumpumpe 12' unter Unterdruck setzbar. Die Vakuumpumpe 12' kann gleichzeitig jene Pumpe sein, welche das Kondenswasser aus den Sammelrinnen des Wassersammlers 13 abzieht und in das Süßwasserbecken 12 leitet.

In der Anlage sind ferner Photovoltaik-Kollektoren 1 vorgesehen, die aus Sonnenenergie elektrischen Strom produzieren, welcher für den Betrieb der Umwälzpumpe 7, der Vakuumpumpe 12', der Speisepumpe 14' sowie der gesamten Steuerung der Anlage verwendet wird. Dadurch ist das System punkto Energie autark.

## Patentansprüche

1. Anlage zur Entsalzung oder Reinigung von Meer- oder Brackwasser mittels Solarenergie, mit
einem geschlossenen Kreislauf aus einem thermischen Sonnenkollektor (2) und einem Wärmetauscher (6, 6'), in welchem Kreislauf ein Wärmeträgermedium zirkuliert,
einem Becken (11), das mit dem zu behandelnden Meer- oder Brackwasser beschickbar ist und in dem der Wärmetauscher (6, 6') zur Aufheizung und Verdampfung desselben angeordnet ist,
einer Kühlfläche (3), die oberhalb des Beckens (11) zur Kondensation des aufsteigenden Dampfes liegt, und
Wassersammlern (13), die unter Teilbereichen der Kühlfläche zum Auffangen des Kondenswassers angeordnet sind,
dadurch gekennzeichnet,
daß der Sonnenkollektor (2) in einem Abstand zu und oberhalb der Kühlfläche (3) in abschattender Beziehung zu letzterer angeordnet ist,
die Kühlfläche (3) aus wärmeleitendem Material gefertigt ist, und
der zwischen Kühlfläche (3) und Sonnenkollektor (2) verbleibende Zwischenraum zur seitlichen Durchströmung mit Umgebungsluft zugänglich ist.

2. Anlage nach Anspruch 1, wobei der Sonnenkollektor (2) gegenüber der Horizontalen geneigt ist, dadurch gekennzeichnet, daß die Kühlfläche (3) stärker geneigt ist als der Sonnenkollektor (2), so daß der genannte Zwischenraum sich in Richtung nach oben düsenförmig verjüngt.

3. Anlage nach Anspruch 1 oder 2, dadurch gekennzeichnet, daß der Raum zwischen Becken (11) und Kühlfläche (3) allseitig geschlossen und mittels einer Vakuumpumpe (12') unter Unterdruck setzbar ist.

4. Anlage nach einem der Ansprüche 1 bis 3, dadurch gekennzeichnet, daß die Kühlfläche (3) im Vertikalschnitt gesehen Wellenform hat und die Wassersammler (13) als in einem Abstand unter den Wellentälern verlaufende Sammelrinnen oder als durchgehendes feines beschichtetes Netz ausgebildet sind.

5. Anlage nach einem der Ansprüche 1 bis 4, dadurch gekennzeichnet, daß das Becken (11) im Vertikalschnitt gesehen eine sich nach unten verjüngende Keilform hat.

6. Anlage nach einem der Ansprüche 1 bis 5, dadurch gekennzeichnet, daß am Boden des Beckens (11) eine zu einem Trogkettenförderer (10) führende Förderschnecke (9) zum Austrag von Rückständen (8) wie Salzsole od.dgl. vorgesehen ist.

7. Anlage nach einem der Ansprüche 1 bis 6 zur Entsalzung von Meerwasser, dadurch gekennzeichnet, daß das Becken (11) im wesentlichen auf Meereshöhe liegt und über eine bei Flut durchströmte und bei Ebbe trockenfallende Rohrverbindung (4) mit dem Meer in Verbindung steht.

8. Anlage nach einem der Ansprüche 1 bis 6, dadurch gekennzeichnet, daß das Becken (11) über eine in die Rohrverbindung (4) eingeschaltete Speisepumpe (14') aus einem Meer- oder Brackwasserreservoir, z.B. einem Uferbrunnen (14"), beschickt ist.

9. Anlage nach einem der Ansprüche 1 bis 8, dadurch gekennzeichnet, daß in dem geschlossenen Kreislauf zwischen den Sonnenkollektor (2) und den Wärmetauscher (3) ein Absorber (5) zum Betrieb eines Kühlhauses (15) oder eine Dampfturbine (5') zum Betrieb eines Generator (16) zwischengeschaltet ist.

10. Anlage nach Anspruch 9, dadurch gekennzeichnet, daß der Absorber (5, 6) bzw. die Dampfturbine (5') in Zeiten schwacher Sonneneinstrahlung mit Hilfe einer Bypass-Schaltung überbrückbar sind.

11. Anlage nach einem der Ansprüche 1 bis 10, dadurch gekennzeichnet, daß Photovoltaik-Panele (1) zum Betrieb elektrisch speisbarer Teile der Anlage, wie der Vakuumpumpe (12'), der Speisepumpe (14'), einer Umwälzpumpe (7) für den geschlossenen Kreislauf, usw., vorgesehen sind.

12. Anlage nach einem der Ansprüche 1 bis 11, dadurch gekennzeichnet, daß die Rohrverbindung (4) vor ihrer Einmündung in das Becken (11) über einen weiteren Wärmetauscher (17) geführt ist, der in wärmeleitender Beziehung zur Kühlfläche (3) angeordnet ist.

## Claims

1. Plant for desalination or purification of sea or brackish water by means of solar energy, having
a closed circuit comprising a thermal solar collector (2) and a heat exchanger (6, 6'), in which circuit a heat transfer medium circulates,
a tank (11) which can be charged with the sea or brackish water to be treated, and in which the heat exchanger (6, 6') is arranged to heat and evaporate the same,
a cooling surface (3) which lies above the tank (11) for condensation of the rising steam, and
water collectors (13) which are arranged below part regions of the cooling surface for catching the condensed water, characterised in that
the solar collector (2) is arranged at a distance from and above the cooling surface (3) in shading relationship with the latter,
the cooling surface (3) is made from heat-conducting material, and
the gap remaining between cooling surface (3) and solar collector (2) is accessible to lateral flow with ambient air.

2. Plant according to claim 1, wherein the solar collector (2) is inclined with respect to the horizontal, characterised in that the cooling surface (3) is at a steeper angle than the solar collector (2), so that the said gap is tapered in the upward direction like a nozzle.

3. Plant according to claim 1 or 2, characterised in that the space between tank (11) and cooling surface (3) is closed on all sides and can be placed under negative pressure by means of a vacuum pump (12').

4. Plant according to one of claims 1 to 3, characterised in that the cooling surface (3) has corrugated shape, seen in vertical section, and the water collectors (13) are designed as collecting channels running at a distance below the corrugation troughs or as a continuous fine coated mesh.

5. Plant according to one of claims 1 to 4, characterised in that the tank (11) has a wedge shape tapering downwards seen in vertical section.

6. Plant according to one of claims 1 to 5, characterised in that a conveyor screw (9) leading to a trough chain conveyer (10), is provided on the base of the tank (11) to discharge residues (8), such as brine or the like.

7. Plant according to one of claims 1 to 6 for desalination of sea water, characterised in that the tank (11) lies essentially at sea level and is connected to the sea via a pipe connection (4) flowed through at high tide and falling dry at low tide.

8. Plant according to one of claims 1 to 6, characterised in that the tank (11) is charged via a feed pump (14') connected in the pipe connection (4) from a sea or brackish water reservoir, for example a shoreline well (14").

9. Plant according to one of claims 1 to 8, characterised in that an absorber (5) for operating a cooling house (15) or a steam turbine (5') for operating a generator (16) is connected in series in the closed circuit between the solar collector (2) and the heat exchanger (3).

10. Plant according to claim 9, characterised in that the absorber (5, 6) or the steam turbine (5') can be bridged in times of weak solar radiation with the aid of a by-pass circuit.

11. Plant according to one of claims 1 to 10, characterised in that photovoltaic panels (1) are provided to operate electrically feedable parts of the plant, such as the vacuum pump (12'), the feed pump (14'), a circulating pump (7) for the closed circuit, etc..

12. Plant according to one of claims 1 to 11, characterised in that the pipe connection (4) before it opens into the tank (11) is guided via a further heat exchanger (17) which is arranged in heat-conducting relationship with the cooling surface (3).

## Revendications

1. Installation pour dessaler ou purifier l'eau de mer ou l'eau saumâtre au moyen de l'énergie solaire, comportant
un circuit fermé constitué d'un collecteur solaire thermique (2) et d'un échangeur de chaleur (6,6'), circuit dans lequel circule un milieu caloporteur,
un bassin (11) qui peut être alimenté en eau de mer et en eau saumâtre à traiter et dans lequel est agencé l'échangeur de chaleur (6,6') pour le réchauffement et l'évaporation de celle-ci,
une face de refroidissement (3) qui se situe au-dessus du bassin (11) pour la condensation de la vapeur ascendante, et
des collecteurs d'eau (13) qui sont agencés au-dessous des zones partielles de la face de refroidissement pour le recueil de l'eau de condensation,
caractérisée en ce que,
le collecteur solaire (2) est disposé à une certaine distance et au-dessus de la face de refroidissement (3) en relation ombragée par rapport à celle-ci,
la face de refroidissement (3) est réalisée à partir d'un matériau conducteur de chaleur, et
l'espace intermédiaire restant entre la face de refroidissement (3) et le collecteur solaire (2) est accessible au passage latérale de l'air ambiant.

2. Installation selon la revendication 1, le collecteur solaire (2) étant incliné par rapport à l'horizontale,
caractérisée en ce que la face de refroidissement (3) est inclinée plus fortement que le collecteur solaire (2) de telle sorte que l'espace intermédiaire mentionné va en s'amenuisant vers le haut en forme de tuyère.

3. Installation selon la revendication 1 ou 2, caractérisée en ce que l'espace entre le bassin (11) et la face de refroidissement (3) est fermé de tous côtés et peut être mis en dépression au moyen d'une pompe à vide (12').

4. Installation selon l'une des revendications 1 à 3,
caractérisée en ce que la face de refroidissement (3) présente une forme ondulée en coupe verticale et les collecteurs d'eau (13) sont conçus sous forme de rigoles collectrices s'étendant à une certaine distance sous les vallées des ondulations ou sous forme d'un réseau continu à couche fine.

5. Installation selon l'une des revendications 1 à 4,
caractérisée en ce que le bassin (11) présente une forme de coin allant en s'amenuisant vers le bas, vu en coupe verticale.

6. Installation selon l'une des revendications 1 à 5,
caractérisée en ce que dans le fond du bassin (11), il est prévu une vis transporteuse sans fin (9) menant à un transporteur à chaîne et à godets ou transporteur en masse (10) pour l'évacuation des résidus (8) tels que les eaux salées et analogues.

7. Installation selon l'une des revendications 1 à 6 pour dessaler l'eau de mer, caractérisée en ce que le bassin (11) se situe essentiellement au niveau de la mer et se trouve en communication avec la mer au moyen d'un raccordement tubulaire (4) traversé par l'eau de mer à marée haute et à sec à marée basse.

8. Installation selon l'une des revendications 1 à 6,
caractérisée en ce que le bassin (11) est alimenté à partir d'un réservoir d'eau de mer ou d'eau saumâtre, par exemple d'un puits côtier (14") par l'intermédiaire d'une pompe d'alimentation (14') mise en oeuvre dans le raccordement tubulaire (4).

9. Installation selon l'une des revendications 1 à 8,
caractérisée en ce que dans le circuit fermé entre le collecteur solaire (2) et l'échangeur de chaleur (3) est intercalé un absorbeur (5) pour le fonctionnement d'un ensemble frigorifique (15) ou une turbine à vapeur (5') pour le fonctionnement d'un générateur (16).

10. Installation selon la revendication 9, caractérisée en ce que l'absorbeur (5,6) ou la turbine à vapeur (5')
dans les périodes de faible rayonnement solaire est shunté au moyen d'un circuit de dérivation (bypass).

11. Installation selon l'une des revendications 1 à 10,
caractérisée en ce qu'il est prévu des panneaux photovoltaïques pour le fonctionnement des parties de l'installation pouvant être alimentées électriquement, comme celui de la pompe à vide (12'), de la pompe d'alimentation (14'), d'une pompe de circulation (7) pour le circuit fermé, etc.

12. Installation selon l'une des revendications 1 à 11,
caractérisée en ce que le raccordement tubulaire (4) est mené à un autre échangeur de chaleur (17) avant de déboucher dans le bassin (11), échangeur de chaleur qui est disposé en relation de conduction de chaleur avec la face de refroidissement (3).
